# EUROPÄISCHE PATENTSCHRIFT

(11) **EP 2 909 595 B1**
(45) Veröffentlichungstag und Bekanntmachung des Hinweises auf die Patenterteilung: **07.12.2016**
(21) Anmeldenummer: 13773706.0
(22) Anmeldetag: 02.10.2013
(51) Int. Cl.: G01M 3/32, G01M 3/02, G01M 3/22, G01M 3/00

(54) **PRÜFLECKVORRICHTUNG ZUM ANBRINGEN AN EINER FLEXIBLEN WANDUNG EINES PRÜFLINGS**
LEAKAGE TESTING DEVICE FOR ATTACHMENT TO A FLEXIBLE WALL OF AN ITEM TO BE TESTED
DISPOSITIF DE FUITE ÉTALON À APPLIQUER SUR LA PAROI SOUPLE D'UN OBJET TESTÉ

(30) Priorität: 18.10.2012 DE 102012219047
(43) Veröffentlichungstag der Anmeldung: 26.08.2015
(73) Patentinhaber: Inficon GmbH, 50968 Köln (DE)
(72) Erfinder: DECKER, Silvio, 50999 Köln (DE)
(74) Vertreter: dompatent von Kreisler Selting Werner - Partnerschaft von Patent- und Rechtsanwälten mbB
(86) Internationale Anmeldenummer: PCT/EP2013/070556
(87) Internationale Veröffentlichungsnummer: WO 2014/060213

(56) Entgegenhaltungen:
- EP-B1- 1 119 755
- WO-A1-2010/032201

## Beschreibung

Die Erfindung betrifft ein Prüfleckvorrichtung zum Anbringen an der Außenseite eines Prüflings.

Prüflecks finden Anwendung bei der Überprüfung oder Kalibrierung von Dichtheitsprüfanlagen, mit denen Prüflinge auf Dichtheit geprüft werden. Bei den Prüflingen handelt es sich typischerweise um Verpackungen von Lebensmitteln, Pharmazeutika oder steril verpackten, in der Medizin eingesetzten Gegenständen. Die Dichtheitsprüfung wird eingesetzt, um Undichtheiten der Verpackung zu erkennen, die zu einem Verderben des verpackten Produkts führen könnten. Der auf Dichtheit zu prüfende Prüfling ist mit einer dünnen Wandung versehen, die die Verpackung des Produkts bildet. Die Dichtheitsprüfung folgt automatisiert mit Dichtheitsprüfanlagen. Vor dem Hintergrund, dass bereits kleine Lecks eines Prüflings zum Verderb des verpackten Produkts führen können, müssen die Dichtheitsprüfanlagen in der Lage sein, kleine Lecks mit hoher Zuverlässigkeit zu erkennen. Die Dichtheitsprüfanlagen müssen in regelmäßigen Abständen getestet und gegebenenfalls kalibriert werden. Hierzu finden Prüflecks Anwendung, die außen an dem Prüfling angebracht werden.

Aus EP 1 119 755 B1 ist es bekannt, die Wandung eines Prüflings mit einem wiederverschließbaren, für Testgas durchlässigen Flickenleck zu versehen. Das Flickenleck ist mit einem umlaufenden Kleberand versehen, mit dem es an der Außenseite des Prüflings festgeklebt wird. Das Flickenleck verschließt ein absichtlich hergestelltes Loch in dem Prüfling und bildet eine definierte Undichtheit. Außerhalb des Prüflings kann Testgas erfasst werden, das den Prüfling durch das Flickenleck von innen nach außen verlässt.

Der Erfindung liegt die Aufgabe zugrunde, ein verbessertes Prüfleck zu schaffen, das eine zerstörungsfreie Verpackungsprüfung in einer Fertigungslinie ermöglicht.

Die erfindungsgemäße Prüfleckvorrichtung ist definiert durch die Merkmale von Patentanspruch 1.

Die Prüfleckvorrichtung ist mit einer Folie und mit einem Klebefilm versehen. Mit Hilfe des Klebefilms kann die Prüfleckvorrichtung außen an dem Prüfling festgeklebt werden. Zwischen der Folie und dem Klebefilm ist ein Hohlraum geschaffen. Die Folie ist im Bereich des Hohlraums mit einem definierten Leck versehen. In dem Hohlraum ist ein Prüfgas enthalten, das aus dem Leck austritt und von einer Dichtheitsprüfanlage erfasst werden kann. Dadurch bildet die Vorrichtung ein Prüfleck und bietet dabei den Vorteil, dass der Prüfling nicht beschädigt wird, um diesen mit einem Prüfleck zu versehen. Das Prüfleck wird lediglich außen auf den Prüfling aufgeklebt und weist eine definierte Menge eines Prüfgases auf, das mit einer vorgegebenen Leckrate durch das Leck entweicht. Zum Testen oder Kalibrieren einer Dichtheitsprüfanlage kann die erfindungsgemäße Prüfleckvorrichtung auf den von der Dichtheitsprüfanlage typischerweise zu prüfenden Prüfling aufgeklebt werden, ohne diesen zu beschädigen. Der Dichtheitsprüfanlage wird dann der Prüfling zugeführt und mit Hilfe der Prüfleckvorrichtung kann die Dichtheitsprüfanlage getestet und kalibriert werden.

Dabei ist es von besonderem Vorteil, wenn der Klebefilm und die Folie aus einem flexiblen, formveränderbaren Material, insbesondere aus dem Verpackungsmaterial des Prüflings bestehen, oder diesem zumindest ähneln. Dies bietet den Vorteil, dass die zu testende oder zu kalibrierende Dichtheitsprüfanlage mit einem Prüfling der üblichen Größe, Form und Beschaffenheit bestückt wird.

Vorzugsweise ist in dem Hohlraum zwischen der Folie und dem Klebefilm eine Verstärkungsvorrichtung, zum Beispiel in Form eines Ringes oder eines offenporigen Schaumstoffes vorgesehen. Die Verstärkungsvorrichtung dient dazu, die Folie von dem Klebefilm zu beabstanden und einen stabilen Hohlraum für das Prüfgas zu schaffen. Im Falle eines Ringes sollte das Leck dann im Bereich der Öffnung des Ringes vorgesehen sein, beispielsweise auf der Mittellängsachse des Ringes oder konzentrisch zu dieser. Bei einem offenporigen Schaumstoff als Verstärkungselement nimmt dieser das Prüfgas auf und erhöht zugleich die Stabilität. Alternativ zu einem offenporigen Schaumstoff kann irgendein anderes Luft bzw. Prüfgas speicherndes Material verwendet werden, das dem Hohlraum die erforderliche Stabilität verleiht. Das Volumen des Hohlraums kann so klein ausgebildet sein, dass es gerade für eine Prüfung ausreicht, oder für mehrere Prüfungen verwendbar ist.

Mit Hilfe des Klebefilms wird die Prüfleckvorrichtung auf die Außenseite des Prüflings geklebt. Vorteilhafterweise sind Klebefilm und Folie aus einem flexiblen Material. Die Prüfleckvorrichtung kann dann nach Art eines Pflasters aufgeklebt werden. Alternativ kann die Prüfleckvorrichtung aber auch starr ausgebildet sein. Nach erfolgter Prüfung kann das Prüfleck von dem Prüfling entfernt werden, ohne diesen zu beschädigen.

Das Leck der Prüfleckvorrichtung kann als kleines Loch in der Folie mit einem Durchmesser von weniger als einem Millimeter ausgebildet sein. Alternativ kann das Leck als verstellbare Blende mit variierbarem Durchmesser von maximal einem Millimeter oder als permeable Folie ausgebildet sein.

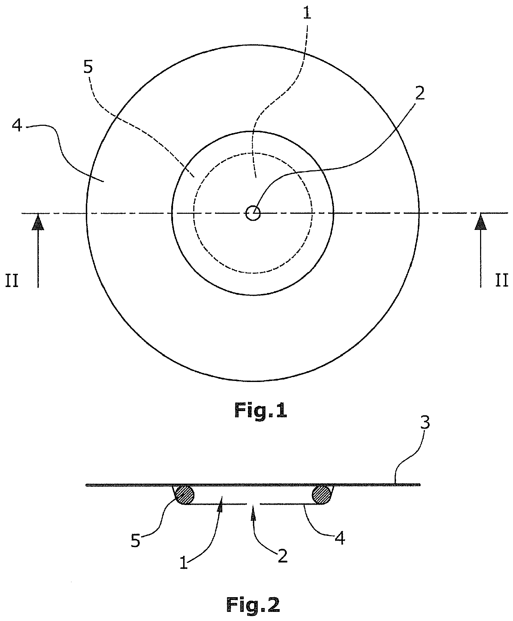

Im Folgenden wird anhand der Figuren ein Ausführungsbeispiel der Erfindung näher erläutert. Figur 1 zeigt eine Draufsicht und Figur 2 einen Schnitt durch die Prüfleckvorrichtung gemäß der Linie II-II in Fig. 1.

Die Prüfleckvorrichtung besteht aus einer Folie 4, einem Klebefilm 3 und einer Verstärkungsvorrichtung 5 und bildet ein Prüfleck. Die Folie 4 und der Klebefilm 3 sind kreisrund mit gleichem Außendurchmesser ausgebildet. Die Folie 4 liegt auf dem Klebefilm 3 auf und ist in deren Randbereich mit diesem fest verbunden. In einem konzentrisch um den Mittelpunkt der Folie und um den Klebefilm 3 angeordneten Bereich ist die Folie nicht mit dem Klebefilm 3 verbunden und bildet zusammen mit diesem einen Hohlraum 1. In ihrem Mittelpunkt ist die Folie 4 mit einem Leck 2 in Form eines kleinen Lochs mit einem Durchmesser von weniger als einem Millimeter versehen. Das Leck 2 bildet einen Zugang zu dem Hohlraum 1, so dass in dem Hohlraum 1 enthaltenes Prüfgas durch das Leck 2 ausströmen kann und von einer Dichtheitsprüfanlage erfasst werden kann. Im Bereich des äußeren Randes des Hohlraums 1 ist in diesem das Verstärkungselement 5 in Form eines Ringes enthalten, der die Folie 4 von dem Klebefilm 3 beabstandet und so einen stabilen Hohlraum 1 schafft. Dadurch ist das Risiko verringert, dass die Folie an dem Klebefilm 3 festklebt und die Ausströmeigenschaften des Prüfgases durch das Leck 2 hindurch verändert.

Der Klebefilm 3 ist auf seiner der Folie 4 gegenüberliegenden Seite mit einer Klebeschicht nach Art eines Klebebandes oder Pflasters versehen. Mit dieser Klebeschicht kann das Prüfleck außen an einem Prüfling festgeklebt werden, ohne diesen zu beschädigen.

## Patentansprüche

1. Prüfleckvorrichtung zum Anbringen an einer flexiblen Wandung eines Prüflings, mit einer Folie (4), die einen Hohlraum (1) an der Außenseite des Prüflings begrenzt, und mit einem Leck (2) versehen ist, wobei die Folie (4) zum Aufkleben auf dem Prüfling ausgebildet ist.

2. Prüfleckvorrichtung nach Anspruch 1, **dadurch gekennzeichnet**, das die Folie (4) mit einem selbstklebenden Klebefilm (3) versehen ist, wobei der Hohlraum (1) zwischen dem Klebefilm (3) und der Folie (4) gebildet ist.

3. Prüfleckvorrichtung nach Anspruch 1 oder 2, **dadurch gekennzeichnet, dass** in dem Hohlraum (1) ein Verstärkungselement (5) vorgesehen ist, das die Folie (4) von dem Klebefilm (3) im Bereich des Hohlraums (1) beabstandet.

4. Prüfleckvorrichtung nach dem vorhergehenden Anspruch, **dadurch gekennzeichnet, dass** das Verstärkungselement (5) ein Ring ist, auf dessen Rotationssachse das Leck (2) angeordnet ist.

5. Prüfleckvorrichtung nach Anspruch 3, **dadurch gekennzeichnet, dass** das Verstärkungselement (5) ein offenporiger Schaumstoff ist.

6. Prüfleckvorrichtung nach einem der vorhergehenden Ansprüche, **dadurch gekennzeichnet, dass** das Leck (2) ein Loch mit einem Durchmesser von weniger als einem Millimeter ist.

7. Prüfleckvorrichtung nach einem der vorhergehenden Ansprüche, **dadurch gekennzeichnet, dass** das Leck (2) eine Kapillare ist.

8. Prüfleckvorrichtung nach einem der vorhergehenden Ansprüche, **dadurch gekennzeichnet, dass** das Leck (2) eine verstellbare Blende mit einem Maximaldurchmesser von weniger als einem Millimeter ist.

9. Prüfleckvorrichtung nach einem der vorhergehenden Ansprüche, **dadurch gekennzeichnet, dass** das Leck aus einem permeablen Folienmaterial mit definierter Permeabilität gebildet ist.

10. Prüfleckvorrichtung nach einem der vorhergehenden Ansprüche, **dadurch gekennzeichnet, dass** die Folie (4) aus einem flexiblen, formbaren Material besteht.

## Claims

1. A leakage testing device for attachment to a flexible wall of an item to be tested, comprising a film (4) which defines a cavity (1) on the outer side of the item to be tested, and is provided with a leakage (2), the film (4) being designed to be stuck onto the item to be tested.

2. The leakage testing device of claim 1, **characterized in that** the film (4) is provided with a pressure-sensitive adhesive film (3), the cavity (1) being formed between the adhesive film (3) and the film (4).

3. The leakage testing device of claim 1 or 2, **characterized in that** a reinforcing element (5) is provided in the cavity (1), which element spaces the film (4) from the adhesive film (3) in the area of the cavity (1).

4. The leakage testing device of the preceding claim, **characterized in that** the reinforcing element (5) is a ring having the leakage (2) formed on the axis of rotation thereof.

5. The leakage testing device of claim 3, **characterized in that** the reinforcing element (5) is an open-pore foamed material.

6. The leakage testing device of one of the preceding claims, **characterized in that** the leakage (2) is a hole with a diameter of less than one millimeter.

7. The leakage testing device of one of the preceding claims, **characterized in that** the leakage (2) is a capillary.

8. The leakage testing device of one of the preceding claims, **characterized in that** the leakage (2) is an adjustable aperture with a maximum diameter of less than one millimeter.

9. The leakage testing device of one of the preceding claims, **characterized in that** the leakage is formed from a permeable film material having a defined permeability.

10. The leakage testing device of one of the preceding claims, **characterized in that** the film (4) is made of a flexible pliable material.

## Revendications

1. Dispositif de fuite étalon à appliquer sur la paroi flexible d'un objet testé, comprenant une feuille (4) qui délimite une cavité (1) sur la face extérieure de l'objet testé, et une fuite (2), la feuille (4) étant conçue pour être collée sur l'objet testé.

2. Dispositif de fuite étalon selon la revendication 1, **caractérisé en ce que** la feuille (4) est pourvue d'un film auto-adhésif (3), la cavité (1) étant formée entre le film adhésif (3) et la feuille (4).

3. Dispositif de fuite étalon selon la revendication 1 ou 2, **caractérisé en ce qu'**est prévu dans la cavité (1) un élément de renforcement (5) qui écarte la feuille (4) du film adhésif (3) dans la région de la cavité (1).

4. Dispositif de fuite étalon selon la revendication précédente, **caractérisé en ce que** l'élément de renforcement (5) est un anneau sur l'axe de rotation duquel est disposée la fuite (2).

5. Dispositif de fuite étalon selon la revendication 3, **caractérisé en ce que** l'élément de renforcement (5) est un matériau mousse à alvéoles ouvertes.

6. Dispositif de fuite étalon selon l'une des revendications précédentes, **caractérisé en ce que** la fuite (2) est un trou d'un diamètre inférieur à un millimètre.

7. Dispositif de fuite étalon selon l'une des revendications précédentes, **caractérisé en ce que** la fuite (2) est un capillaire.

8. Dispositif de fuite étalon selon l'une des revendications précédentes, **caractérisé en ce que** la fuite (2) est un diaphragme réglable d'un diamètre maximum inférieur à un millimètre.

9. Dispositif de fuite étalon selon l'une des revendications précédentes, **caractérisé en ce que** la fuite est formée d'une feuille perméable d'une perméabilité définie.

10. Dispositif de fuite étalon selon l'une des revendications précédentes, **caractérisé en ce que** la feuille (4) se compose d'un matériau flexible déformable.
